# DEMANDE DE BREVET EUROPEEN

(11) **EP 2 068 243 A1**
(43) Date de publication de la demande: **10.06.2009**
(21) Numéro de dépôt: 08305666.3
(22) Date de dépôt: 10.10.2008
(51) Int. Cl.: G06F 9/50, G06F 17/30, G06Q 10/00

(54) **Procédé de composition automatique de services web et système informatique pour la mise en oeuvre d'un tel procédé**

(30) Priorité: 30.10.2007 FR 0707638
(71) Demandeur: Alcatel Lucent, 75008 Paris (FR)
(72) Inventeur: Pastor, Alain, 91620, Nozax (FR); Le Berre, Olivier, 91620 Nozay (FR); Fontaine, Patrick, 91620, Nozay (FR)
(74) Mandataire: Sciaux, Edmond

(57) **Abrégé**

Procédé de composition automatique de services web, à partir d'une composition statique existante et d'une requête, ce procédé comprenant :
- l'extraction de concepts dans ladite requête;
- la découverte de services web dont la sémantique correspond à celle des concepts extraits de ladite requête ;
- une substitution d'au moins un service web de ladite composition statique par un service web découvert ;
- le séquençage des services web de ladite composition, tenant compte de ladite substitution ;
- la composition des services web séquencés.

## Description

L'invention se rapporte au web sémantique et plus particulièrement aux services web sémantiques.

L'invention concerne plus particulièrement la composition automatique de services web.

Le web a été conçu initialement pour échanger et partager des documents statiques. De ce fait, la première génération du Web (*World Wide Web*) souffre d'un certain nombre de limitations.

En premier lieu, le nombre de pages visibles sur le web est très élevé et toujours en augmentation, de sorte que les utilisateurs ont des difficultés à accéder à l'information ou au service qu'ils recherchent. A titre indicatif, en juillet 2005, Yahoo® a recensé 20 milliards de pages web pour Yahoo® et plus de huit milliards pour Google® (source www.ysearchblog.com/archives).

En second lieu, les utilisateurs du web ne sont pas seulement à la recherche de documents. Par exemple, un utilisateur peut souhaiter réserver une table dans un restaurant, pour une certaine gamme de prix, ce restaurant ne devant pas être trop éloigné d'un cinéma proposant tel ou tel film. Pour effectuer cette réservation, l'utilisateur du web devra consulter plusieurs pages et effectuer un raisonnement.

En troisième lieu, les pages web ne contiennent généralement aucune information aidant un ordinateur à déterminer la signification des données contenues dans ces pages.

Pour pallier ces limitations, le paradigme du web sémantique a été proposé. L'expression « web sémantique » a été introduite en 1998 par Tim Berners-Lee sur la page d'accueil du consortium W3C (*Roadmap to the Semantic Web*, voir également T. Berners-Lee et al, Sci. Am. 279, 2001, pp.34-43). Plus récemment, il a été proposé d'ajouter de la sémantique aux services web, pour obtenir des web services sémantiques.

L'expression « web service » est employée ici pour désigner une application accessible à partir du web. Un service web utilise les protocoles Internet pour communiquer et utilise un langage standard pour décrire son interface. En d'autres termes, un service web est un logiciel identifié par une URI (*Universal Ressource Identifier*) dont les interfaces et les exécutions peuvent être définies, décrites et découvertes comme des artéfacts XML (*Extensible Markup Language*), un service web fournissant l'interaction directe avec d'autres agents logiciels communiquant par des messages XML échangés via des protocoles Internet.

Le développement des web services sémantiques implique la création d'ontologies. Plusieurs définitions ont été proposées pour le terme « ontologie » (voir Steffen Staab « Handbook on ontologies », International Handbooks on Information Systems, 2005). Ce terme est ici utilisé notamment en référence à la définition la plus souvent citée dans la littérature relative au web sémantique : une ontologie est une « spécification explicite d'une conceptualisation d'un domaine» (T.R Gruber Towards principles for the design of ontologies used for a knowledge sharing, Formal ontology in conceptual analysis and knowledge representation, Kluwer academic publishers; 1993). En d'autres termes, une ontologie défini les termes de description et de représentation d'un domaine de connaissance. A titre d'exemple, *Guarino* suggère une conceptualisation comme structure d'un ensemble de mondes possibles. Guarino propose un triple <W, D, R> dans lequel W est l'ensemble des mondes possibles, D est le domaine c'est-à-dire l'ensemble des individus des mondes possibles, et R est l'ensemble des arrangements de relations observables sur les éléments de D dans un monde possible.

Le développement des web services sémantiques présente trois aspects :
- le développement d'ontologies de description des données manipulées par les services web ;
- la définition sémantique des services ;
- le développement d'une ontologie de services web.

Le développement d'ontologies de description des données manipulées par les services web est commun au développement du web sémantique. Les standards utilisés pour représenter les ontologies sont principalement RDF, RDF Schema, DAML+OIL, SHOE, et OWL.

RDF (*Ressource Description Framework*) est un modèle de graphe pour décrire des méta données et permet l'interopérabilité entre des applications échangeant de l'information sur le web (D. Brickley et al, RDF Vocabulary Description Language 1.0: RDF Schema, World Wide Web Consortium, Recommendation REC-rdf-schema-2004*).* DAML+OIL résulte de DAML (DARPA *Agent Markup Language*) et OIL (*Ontology Inference Layer*), la dernier version de DAML+OIL ayant été lancée comme recommandation du W3C sous la dénomination OWL (*Ontology Web Language*, voir F. Van Harmelen IEEE intelligent system 2002 pp.70*).* OWL contient trois langages classés par ordre d'expressivité : OWL-Lite, OWL-DL et OWL-Full. Les ontologies sont pas exemple éditées par Oiled et Protégé, des exemples d'ontologies appliquées à divers domaines étant présentés sur le site de Protégé http://protege.standford.edu.

La définition sémantique des services concerne aussi bien les propriétés non fonctionnelles (qualité de service QoS), que la signification des paramètres manipulés ou l'environnement (autres services web, clients, ontologies, bases de données).

Le développement d'une ontologie de service web met conventionnellement en oeuvre OWL-S. Soumis au W3C en 2004, OWL-S a été conçu pour « permettre la découverte, la sélection, l'invocation, la composition, l'interopérabilité, l'exécution et le monitoring des web services ». OWL-S défini un web service par :
- une ressource (*Resource*), c'est-à-dire un fournisseur (*Provider*) ;
- des moyens d'accès au service (*Service Grounding*) : par exemple protocole de communication, numéro de port ;
- une description de fonctionnement, en terme de workflow (*Service Mode*/) ;
- un *Service Profile* qui spécifie ce que fait le service avec ses entrées (*input*) et sorties (*ouput*), ses préconditions et ses effets.

Les web services existants dans l'état de la technique ont une architecture orientée composant SOA (*Service Oriented Architecture*). Cette architecture comprend six types d'acteurs :
- le fournisseur du web service, par exemple un serveur hébergeant les services déployés;
- un client du service web, c'est-à-dire l'application cliente qui invoque le service;
- un annuaire ou registre de web services, fournissant des informations nécessaires à la localisation des web services ;
- le service, c'est-à-dire les fonctionnalités d'un agent logiciel qui implémente le service;
- la ressource, c'est-à-dire l'URL ou l'URI du web service ;
- les messages, c'est-à-dire la plus petite unité d'échange entre les clients et les services.

L'annuaire de web services est en standard un UDDI (*Universal Description, Discovery and Integration*). Un UDDI public ou privé n'est pas un annuaire sémantique : la description des services est effectuée par le fournisseur lui-même, par des annotations textuelles. Un annuaire UDDI comprend des informations d'accès aux services web et des informations contextuelles, par exemple une brève description des services et leurs fonctionnalités. Un annuaire UDDI est composé de deux parties : d'une part l'annuaire d'entreprises et de services web (*UDDI Business Registry*) et d'autre part les interfaces d'accès et les modèles de données. Dans l'annuaire, les informations, au format XML, sont organisées en trois catégories :
- des pages blanches : nom, adresses, contacts, identifiants des entreprises enregistrées,
- des pages jaunes, qui recensent les services web de ces entreprises, au standard WSDL ;
- des pages vertes fournissant des informations techniques sur les services fournis (interfaces implémentées, description du processus en plusieurs langages, pointeurs vers les spécifications décrivant les API).

Les messages échangés par les web services utilisent en standard le protocole SOAP (*Simple Object Access Protocol*). Un message SOAP comprend une enveloppe (permettant de spécifier la version de SOAP utilisée), un entête (optionnel), un corps (contenant les données à échanger), et des pièces jointes (par exemple pour l'envoi de données qui ne sont pas encodées en XML). Le protocole SOAP est indépendant de la plateforme utilisée et du langage de programmation utilisé. L'échange de données est effectué par des appels de procédures à distance utilisant des protocoles de communication de type http/SMTP/POP.

L'interface des web services est décrite en standard par le langage SA-WSDL (*Web Service Description Language*). SA-WSDL est un langage normalisé par le W3C (version 1.1 du 15 mars 2001, voir http://www.w3.org/TR/wsdl). Cette spécification permet de décrire l'interface des web services comme une boîte noire, avec un ensemble de ports d'entrée et de sortie. Les fonctionnalités du service sont décrites indépendamment du langage de programmation.

Il est souvent nécessaire de composer des services web.

Par composition de services, on désigne une agrégation de services susceptibles d'agir comme un nouveau service à part entière.

Les techniques de composition de services peuvent être classées en deux familles : les techniques dites statiques (orchestration et chorégraphie) et les techniques dynamiques (processus métier, techniques d'intelligence artificielle).

L'orchestration permet de définir l'enchaînement des services selon un canevas prédéfini, les services étant exécutés à travers des scripts d'orchestration. Ces scripts décrivent les interactions entre services en identifiant les messages échangés, les branchements logiques et les séquences d'invocation. L'orchestration est basée sur un processus métier exécutable pouvant interagir avec des services web internes et externes.

La chorégraphie trace la séquence de messages pouvant impliquer plusieurs sources (les clients, les fournisseurs, les partenaires).

En d'autres termes, dans la composition par orchestration, l'accent est mis sur l'ordonnancement des traitements effectués par les services composés, tandis que dans la composition par chorégraphie, l'ordonnancement des services se base sur les messages échangés et sur la prise en compte des évènements par les services composés.

Dans la composition dynamique, les services web sont composés en fonction de leurs fonctionnalités, de leur disponibilité et des aléas pouvant survenir au moment du processus de composition.

Plusieurs langages d'orchestration et/ou de chorégraphie ont été proposés : XLANG (*XML Business Process Language*), langage de chorégraphie décrivant le comportement de chaque service vis à vis des évènements qu'il pourra rencontrer ; BPML (*Business Process Modeling Language*) ; WSFL (*Web Service Flow Language*) ; WSCL (*Web Service Conversation Language*), langage de chorégraphie décrivant les interactions entre les couples de services web sans spécifier comment est créé le contenu des messages échangés ; WSCI (*Web Service Choregraphy Interface*) ; BPEL4WS (*Business Process Execution Language for Web Services*) et WS-BPEL, langage d'orchestration et de chorégraphie.

Le langage de composition WS-BPEL décrit deux types de processus : des processus exécutables et des processus abstraits. Les processus exécutables spécifient les détails de processus métier et son exécutés par un moteur BPEL. Les processus abstraits spécifient l'échange public de messages entre le client et le service et constituent le protocole d'interaction.

La composition de service se déroule conventionnellement en trois étapes. Dans un premier temps, les services web sont recherchés et sélectionnés à partir d'un annuaire UDDI en fonction des besoins à réaliser. Dans un deuxième temps, la composition est effectuée en utilisant la description (syntaxique ou sémantique) des services sélectionnés. Dans un troisième temps, une description du service composite est créée (enchaînement des appels aux services sélectionnés).

La composition de services est complexe, pour plusieurs raisons.

En premier lieu, le nombre de services disponibles est potentiellement très important et en augmentation : les services web peuvent être créés, modifiés à la volée, ou supprimés dans les registres de type UDDI sans que l'annuaire soit à jour. Le système de composition doit donc pouvoir déceler ces changements.

En deuxième lieu, les services web sont créés par des organisations différentes qui n'ont pas forcément les mêmes modèles de concepts pour décrire ces services. Deux services effectuant la même action peuvent être décrits de manière différente.

En troisième lieu, les services peuvent être instables (par exemple par suite d'une panne) ou ne pas avoir le comportement spécifié.

Les fournisseurs de services n'ont actuellement pas de moyens de modification dynamique d'une implémentation ou d'une composition de services existante. Une modification de service implique d'enlever le service, de le re-codifier puis de le redéployer. Pendant ce temps, le service est rendu indisponible pour ses utilisateurs. De plus, si la modification du service affecte sa description WSDL, ou le protocole d'interaction BPEL, les utilisateurs du service ne pourront plus interagir avec celui-ci.

Le mode d'invocation des services web en BPEL est figé : il s'appuie sur une déclaration formelle en XML. Les infrastructures d'orchestration existantes telles que moteurs BPEL ne permettent pas l'introspection d'un annuaire de services, par exemple UDDI, pour dynamiquement choisir la bonne version d'un service web selon le contexte d'exécution du processus.

Pour pallier au moins en partie les problèmes qui viennent d'être mentionnés, l'invention vise à fournir un nouveau procédé de composition automatique de services web.

Avantageusement, le procédé selon l'invention permettra une substitution dynamique de services, c'est-à-dire le remplacement, dans le canevas d'une orchestration, d'un service web indisponible par un service web sémantique ou une composition de services web sémantiques.

Avantageusement, le procédé selon l'invention permettra l'utilisation dynamique des infrastructures d'orchestration existantes, notamment les moteurs d'orchestration BPEL, par exemple Orchestra®.

L'invention se rapporte, selon un premier aspect, à un procédé de composition automatique de services web, à partir d'une composition statique existante et d'une requête, ce procédé comprenant :
- l'extraction de concepts dans ladite requête;
- la découverte de services web dont la sémantique correspond à o celle des concepts extraits de ladite requête ;
- une substitution d'au moins un service web de ladite composition statique par un service web découvert ;
- le séquençage des services web de ladite composition, tenant compte de ladite substitution ;
- la composition des services web séquencés.

Dans diverses réalisations, le procédé présente les caractères suivants, le cas échéant combinés :
- le procédé comprend une étape de substitution d'au moins un service web de ladite composition statique par une composition de services web découverts ;
- la structure principale du service composé est fondée sur la structure syntaxique de la requête ;
- le procédé comprend une étape de classement entre différentes compositions, sur la base de propriétés non fonctionnelles telles que qualité de service ou profil de l'utilisateur.
- la requête est effectuée en langage naturel ou en langage sémantique de requête tel que notamment SPARQL ;
- le langage sémantique de requête est SPARQL ;
- l'étape de découverte de services web comprend un accès à un annuaire de service ;
- l'annuaire de services est un annuaire UDDI.

L'invention se rapporte selon un deuxième aspect à un produit programme d'ordinateur adapté à mettre en oeuvre les étapes du procédé présenté ci-dessus.

L'invention se rapporte, selon un troisième aspect, à un système informatique comprenant des moyens de code adaptés à mettre en oeuvre les étapes du procédé présenté ci-dessus.

D'autres objets et avantages de l'invention apparaîtront au cours de la description suivantes de modes de réalisation actuellement préférés.

Dans la suite de cette description, le terme SWRMS sera employé pour désigner un service web requis par mécanisme sémantique.

Avantageusement, la description sémantique d'un SWRMS est effectuée à l'aide du langage SA-WSDL (*Semantic Annotation WSDL*). Les SWRMS peuvent ainsi être publiés dans des registres du type UDDI.

L'exécution des SWRMS est avantageusement effectuée en mettant en oeuvre le standard SOAP, commun aux services web.

Un logiciel accessoire (*plug in*) dédié permet la création des SWRMS, c'est-à-dire la description sémantique (par exemple à l'aide de SA-WSDL) et son implémentation (exécution), à partir :
- d'une requête en langage naturel ;
- d'une requête formalisée, par exemple en langage SPARQL (*Protocol and RDF Query Laguage*) ;
- d'un fichier WSDL dans lequel des annotations sémantiques ont été ajoutées.

La requête est enregistrée pour être utilisée ultérieurement lors de l'invocation du SWRMS. Cette invocation peut par exemple être effectuée par un moteur BPEL.

Lors de cette invocation, dans une première étape, la requête est l'objet d'une analyse sémantique. A titre d'exemple, la requête en langage naturel est : « envoyer moi chaque matin une traduction en grec des dépêches de l'agence Reuters ».

L'analyse sémantique permet d'extraire les concepts liés à la requête, ces concepts clés étant dans cet exemple exprimés sous la forme de besoins élémentaires : « chaque matin », « envoyer moi », « traduction grecque », « dépêches Reuters ». Les services web correspondant à chaque besoin élémentaire sont découverts. Chaque besoin est recherché dans les ontologies attachées à la description sémantique des services. Dans une mise en oeuvre, les ontologies sont décrites en langage OWL-S.

Un module de correspondance sémantique permet, le cas échéant, d'appeler un service supplémentaire, lorsque la correspondance entre les besoins élémentaires et les services disponibles n'est pas satisfaisante.

Les services découverts sont composés automatiquement, une ou plusieurs compositions étant générées. Dans une réalisation avantageuse, la composition est une orchestration, dont la structure de base est celle d'un moteur existant, l'un des services de ce moteur étant remplacé par un service découvert.

La structure principale du service composite est fondée sur la structure syntaxique de la requête. Cette structure est tout d'abord exprimée sous la forme d'une suite logique d'opérations.

Pour l'exemple de requête donné ci-dessus, la structure principale du service sera:

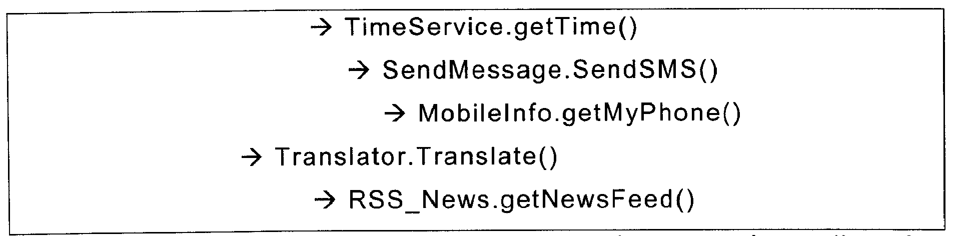

Cette structure est alors complétée par des paramètres d'entrée sortie nécessaires pour chaque opération, ces paramètres étant exprimés en fonction de leurs balises sémantiques :

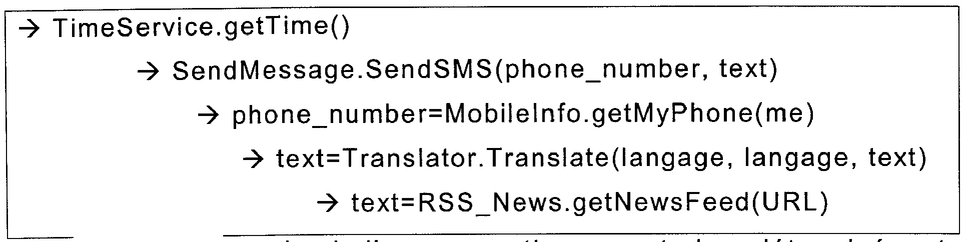

Les liens entre les balises sémantiques sont alors déterminés, et enregistrées. Dans l'exemple ci-dessus, une expression complète de la composition de services sera la suivante :

| |
|---|
| TimeService.getTime("08:00") |
| newsFeed=RSS_News.getNewsFeed(URL) |
| translatedText= Translator.Translate(english, greek, newsFeed) |
| my_phone_number=Mobilelnfo.getMyPhone(me) |
| SendMessage.SendSMS(my_phone_number, translated text) |

Avantageusement, un classement est réalise entre les différentes orchestrations proposes, sur la base de propriétés non fonctionnelles telles que par exemple qualité de services QoS ou profil de l'utilisateur.

Par exemple, l'utilisateur peut avoir un profil Y pour des services web enregistrés dans les annuaires publics, les utilisateurs ayant un profil Z pouvant bénéficier de plus d'avantages, par exemple des services web présentant une plus haute qualité de services et enregistrés dans des annuaires privés.

Par exemple, en fonction du contexte de l'utilisateur, trois opérations du service de messages peuvent correspondre à la requête :

| |
|---|
| SendMessage.SendSMS(my_phone_number, translated text) |
| SendMessage.SendFax(my_phone_number, translated text) |
| SendMessage.SendVoiceAnnouncement(my_phone_number, translated text) |

Si l'utilisateur est au volant de son automobile, l'opération SendMessage.SendVoiceAnnouncement(my_phone_number, translated text) sera préférée.

Le nouveau service est généré à partir de l'orchestration sélectionnée. Ce nouveau service est déployé pour les utilisateurs finaux. Il peut être supprimé après usage.

Le procédé selon l'invention présente de nombreux avantages.

Un SWRMS peut être délivré même si une partie usuelle d'un service web devient indisponible. Dans ce cas, le service web manquant est remplacé par un autre service web (ou une composition de services web) lors de l'appel d'un service web requis sémantiquement. Par exemple, supposons qu'un service web A et une composition de deux services B et C correspondent aux caractéristiques d'un SWRMS. Lors de l'appel de ce SWRMS, le procédé qui implémente le service requis peut soit exécuter le service A ou la composition. Si le service A est préféré mais indisponible (par exemple parce que non accessible par suite d'un problème de réseau), alors le procédé exécute la composition B+C.

La dynamique d'un SWRMS est transmise aux composants qui l'utilisent. Typiquement, l'orchestration utilisant les SWRMS ne requiert pas de mise à jour en cas de changement dans les services web sous jacents.

Dans la mesure où un SWRMS reste un service web, tous les outils propriétaires de création de service et d'exécution d'environnements peuvent encore être utilisés.

La génération de l'implémentation des SWRMS peut être adaptée de sorte à tenir compte de contraintes spécifiques ou de nouveaux standards ou nouvelles techniques dans le domaine sémantique.

Le procédé permet dé bénéficier des avantages des mécanismes de recherche sémantique lors de l'utilisation d'orchestration existantes, l'adresse URL des services web étant modifiée dans le fichier de configuration de l'orchestration.

## Revendications

1. Procédé de composition automatique de services web, à partir d'une composition statique existante et d'une requête, ce procédé comprenant :
- l'extraction de concepts dans ladite requête;
- la découverte de services web dont la sémantique correspond à celle des concepts extraits de ladite requête ;
- une substitution d'au moins un service web de ladite composition statique par un service web découvert ;
- le séquençage des services web de ladite composition, tenant compte de ladite substitution ;
- la composition des services web séquencés.

2. Procédé de composition automatique de services web selon la revendication 1, **caractérisé en ce qu'**il comprend une étape de substitution d'au moins un service web de ladite composition statique par une composition de services web découverts.

3. Procédé de composition automatique de services web selon la revendication 1 ou 2, **caractérisé en ce que** la structure principale du service composé est fondée sur la structure syntaxique de la requête.

4. Procédé de composition automatique de services web selon l'une quelconque des revendications précédentes, **caractérisé en ce qu'**il comprend une étape de classement entre différentes compositions, sur la base de propriétés non fonctionnelles telles que qualité de service ou profil de l'utilisateur.

5. Procédé de composition automatique de services web selon l'une quelconque des revendications précédentes, **caractérisé en ce que** la requête est effectuée en langage naturel ou en langage sémantique de requête tel que notamment SPARQL.

6. Procédé de composition automatique de services web selon la revendication 5, **caractérisé en ce que** le langage sémantique de requête est SPARQL.

7. Procédé de composition automatique de services web selon l'une quelconque des revendications précédentes, **caractérisé en ce que** l'étape de découverte de services web comprend un accès à un annuaire de service.

8. Procédé de composition automatique de services web selon la revendication 7, **caractérisé en ce que** l'annuaire de services est un annuaire UDDI.

9. Produit programme d'ordinateur adapté à mettre en oeuvre les étapes du procédé selon l'une des revendications précédentes.

10. Système informatique spécialement conçu pour la mise en oeuvre les étapes du procédé selon l'une quelconque des revendications 1 à 8.
